# EUROPEAN PATENT APPLICATION

(11) **EP 2 175 613 A1**
(43) Date of publication of application: **14.04.2010**
(21) Application number: 09160117.9
(22) Date of filing: 13.05.2009
(51) Int. Cl.: H04L 29/08, G06F 9/44

(54) **Mobile wireless communications device and system providing dynamic management of carrier applications and related methods**

(30) Priority: 08.10.2008 US 103764 P
(71) Applicant: Research In Motion Limited, Waterloo, Ontario N2L 3W8 (CA)
(72) Inventor: Stoev, Orlin Vesselinov, Waterloo Ontario N2L 3W8 (CA); Brown, Michael W., Waterloo Ontario N2L 3W8 (CA)
(74) Representative: Fennell, Gareth Charles

(57) **Abstract**

A mobile wireless communications system may include a mobile wireless communications device(s) configured to wirelessly communicate via a carrier network, and a application storage server(s) configured to store a plurality of mobile device applications for use by the mobile wireless communications device(s). The system may further include an application catalog server configured to provide an interface for uploading at least one mobile device application identification file from the carrier network identifying approved mobile device applications. The application catalog server may be further configured to generate a list of the approved mobile device applications to be presented on the mobile wireless communications device(s) based upon the at least one mobile device application identification file, and to direct the mobile wireless communications device(s) to the at least one application storage server to download and install a mobile device application selected from the list of approved mobile device applications.

## Description

### Related Application

This application is based upon prior filed copending provisional application Serial No. 61/103,764 filed October 8, 2008, the entire subject matter of which is incorporated herein by reference in its entirety.

### Technical Field

The present disclosure relates to the field of communications systems, and, more particularly, to mobile wireless communications systems and related methods.

### Background

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function or "smart" devices may also allow users to wirelessly send and receive electronic mail (email) messages and access the Internet via a cellular network and/or a wireless local area network (WLAN), for example.

Mobile devices such as smart phones are also capable of running relatively sophisticated applications, such as games, document processing applications, chat or instant messaging applications, etc. As a result, it may be desirable to provide enhanced approaches for accessing and managing applications for mobile devices, especially as new applications continue to be developed and become available.

### Brief Description of the Drawings

For a better understanding of the various embodiments described herein and to show more clearly how they may be carried into effect, reference will now be made, by way of example only, to the accompanying drawings which show at least one example embodiment and in which:

FIG. 1 is a schematic block diagram of a mobile wireless communications system in accordance with one embodiment;

FIGS. 2 and 3 are flow diagrams illustrating mobile wireless communications method aspects in accordance with various embodiments;

FIGS. 4-6 are schematic block diagrams of various exemplary implementations of the system of FIG. 1;

FIG. 7 is a schematic block diagram of an exemplary embodiment of a mobile device that may be used with the system of FIG. 1;

FIG. 8 is a schematic block diagram of an exemplary embodiment of a communication subsystem component of the mobile device of FIG. 7;

FIG. 9 is an exemplary block diagram of a node of a wireless network; and

FIG. 10 is a schematic block diagram illustrating components of a host system in one exemplary configuration for use with the wireless network of FIG. 9 and the mobile device of FIG. 7.

### Detailed Description

The present description is made with reference to the accompanying drawings, in which exemplary embodiments are shown. However, many different exemplary embodiments may be used, and thus the description should not be construed as limited to the exemplary embodiments set forth herein. Rather, these exemplary embodiments are provided so that this disclosure will be thorough and complete. Like numbers refer to like elements throughout, and prime and double prime notation is used to indicate similar elements or steps in different embodiments.

In addition, numerous specific details are set forth in order to provide a thorough understanding of the example embodiments described herein. However, it will be understood by those of ordinary skill in the art that the exemplary embodiments described herein may be practiced without these specific details. In other instances, well-known methods, procedures and components have not been described in detail so as not to obscure the exemplary embodiments described herein. Also, the description is not to be considered as limiting the scope of the example embodiments described herein.

Generally speaking, a mobile wireless communications system is set forth herein which may include at least one mobile wireless communications device configured to wirelessly communicate via a carrier network, and at least one application storage server configured to store a plurality of mobile device applications for use by the at least one mobile wireless communications device. The system may further include an application catalog server configured to provide an interface for uploading at least one mobile device application identification file from the carrier network identifying approved mobile device applications. The application catalog server may be further configured to generate a list of the approved mobile device applications to be presented on the at least one mobile wireless communications device based upon the at least one mobile device application identification file, and to direct the at least one mobile wireless communications device to the at least one application storage server to download and install a mobile device application selected from the list of approved mobile device applications.

The interface may also be for permitting modification of the at least one mobile device application identification file by the carrier network. Furthermore, the at least one mobile wireless communications device may comprise a plurality thereof having respective device types. As such, the application catalog server may be configured to generate different lists of approved mobile device applications for respective mobile wireless communications device types. In addition, the at least one mobile wireless communications device may be configured to generate an installation report upon installation of the selected mobile device application. Moreover, the application catalog server may be configured to collect the installation report.

By way of example, the at least one application identification file may comprise an extensible markup language (XML) file. Furthermore, the list of the approved mobile device applications may comprise a Really Simple Syndication (RSS) formatted list including a plurality of application descriptors. Moreover, the application descriptors may include at least one of an application name, version, vendor, description, and size.

A related application catalog server may be for use with at least one mobile wireless communications device configured to wirelessly communicate via a carrier network, and at least one application storage server configured to store a plurality of mobile device applications for use by the at least one mobile wireless communications device. The application catalog server may include an interface module configured to provide an interface for uploading at least one mobile device application identification file from the carrier network identifying approved mobile device applications. The application catalog server may further include a processing module configured to generate a list of the approved mobile device applications to be presented on the at least one mobile wireless communications device based upon the at least one mobile device application identification file, and direct the at least one mobile wireless communications device to the at least one application storage server to download and install a mobile device application selected from the list of approved mobile device applications.

A related mobile wireless communications method may include providing at least one mobile wireless communications device configured to wirelessly communicate via a carrier network, and storing a plurality of mobile device applications for use by the at least one mobile wireless communications device on at least one application storage server. Furthermore, at an application catalog server, an interface may be provided for uploading at least one mobile device application identification file from the carrier network identifying approved mobile device applications. Additionally, a list of the approved mobile device applications may be generated to be presented on the at least one mobile wireless communications device based upon the at least one mobile device application identification file, and the at least one mobile wireless communications device may be directed to the at least one application storage server to download and install a mobile device application selected from the list of approved mobile device applications.

A physical computer-readable medium is also provided for use with at least one mobile wireless communications device that is configured to wirelessly communicate via a carrier network, and at least one application storage server configured to store a plurality of mobile device applications for use by the at least one mobile wireless communications device. The computer-readable medium may include an interface module configured to provide an interface for uploading at least one mobile device application identification file from the carrier network identifying approved mobile device applications. A processing module may also be configured to generate a list of the approved mobile device applications to be presented on the at least one mobile wireless communications device based upon the at least one mobile device application identification file, and direct the at least one mobile wireless communications device to the at least one application storage server to download and install a mobile device application selected from the list of approved mobile device applications.

Mobile wireless communications device application management systems and methods are described herein for providing enhanced functionality with respect to software applications for the devices. The exemplary embodiments described herein may be used with mobile wireless communication devices, hereafter referred to as mobile devices, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

Generally speaking, it may be desirable to allow carriers to have a central place on a mobile device to market and make available applications of their choosing, and to be able to dynamically change this content at any time. This may be seen as a more robust replacement for carrier virtual pre-loads (VPLs). More particularly, a VPL is an existing mechanism where a service book can be pushed to devices that will result in an application download icon being placed on the device's ribbon (if the application is not already installed). When the icon is clicked, the device browser is opened to a download page for the particular application. Some of the drawbacks to this approach are that it requires a separate service book for each application, that it may clutter the device's ribbon when many VPLs are pushed, and that it may be hard for a user to immediately distinguish a true application icon from a VPL icon.

As will be discussed further below, Research in Motion Limited (RIM) hosts a server in a network operating center (NOC) which contains lists of applications per carrier/device type/OS version. These lists are stored as XML files, for example.

In accordance with one embodiment, carriers may make requests to add applications to the lists by providing details to RIM about the application including, for example, name, vendor, version, text description, icon, marketing image, and links to the application binaries (which may not necessarily be hosted by RIM). The application details are entered into an editor utility which generates the XML files to be hosted. The lists are published to the RIM hosted server in the NOC using a server publishing utility. These steps are done by RIM. Service books are pushed to devices, which specify the base URL location of the RIM hosted server. Part of the base URL includes the name of the carrier.

The device appends its device type and OS version to the base URL when it downloads the XML files from the server so that it gets the appropriate list. The device presents the list of applications to the user in a central UI application, from which the user is able to invoke the installation of selected applications. The device may check for updates to the list automatically at a given interval if enabled, or manually as requested by the user, allowing additions or changes to the list to be propagated from the server to the device.

By way of contrast, other typical mobile device application approaches do not allow for control by carriers, rather they either make available single vendor applications (e.g., Google^{™} Mobile Updater), or arbitrary third party applications submitted by developers themselves (e.g., Handango InHand, iPhone App Store, etc.).

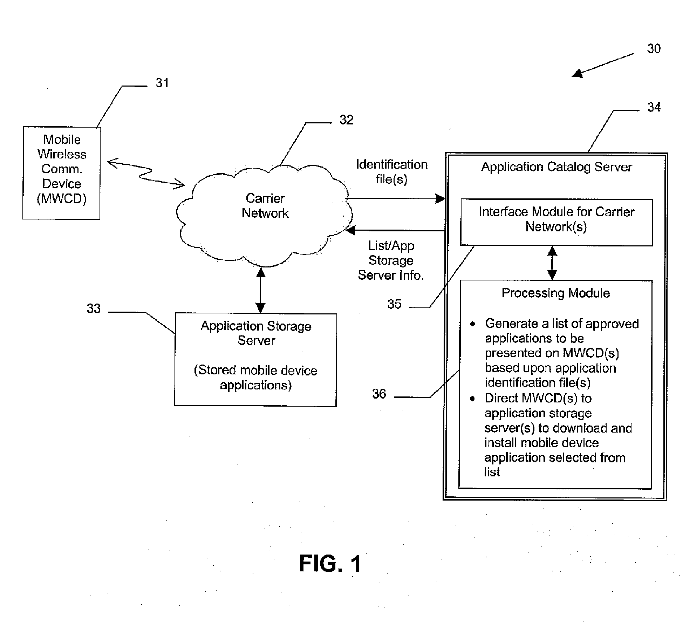

Turning more particularly to FIGS. 1-2, a mobile wireless communications system **30** and associated method aspects are first described. Beginning at Block **40**, one or more mobile wireless communications devices **31**, such as those noted above, are configured to wirelessly communicate via a carrier network **32** (e.g., a cellular network), at Block **41.** One or more application storage servers 33 are configured to store a plurality of mobile device applications for use by the mobile wireless communications device **31,** at Block **42.** Moreover, an application catalog server **34** is configured to provide an interface or interface module **35** for uploading one or more mobile device application identification files from the carrier network **32** identifying approved mobile device applications, at Block **43.** This advantageously allows the carrier to add new applications that it wants to make available for the mobile device, as will be discussed further below.

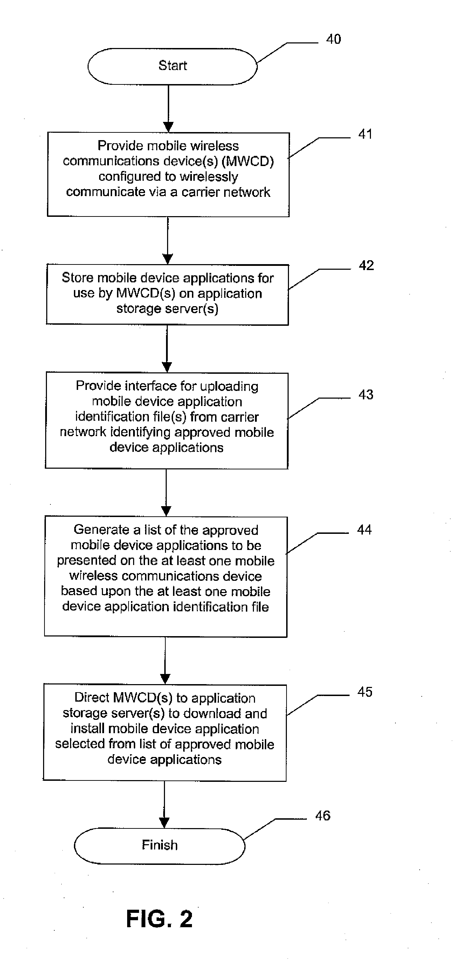

The application catalog server **34** may further include a processor or processing module **36** configured to generate a list of the approved mobile device applications to be presented on the mobile wireless communications device **31** based upon the application identification file(s), at Block **44**, and to direct the mobile wireless communications device to the application storage server **33** to download and install a mobile device application selected from the list of approved mobile device applications, at Block **45**, thus concluding the method illustrated in FIG. 2 (Block **46).**

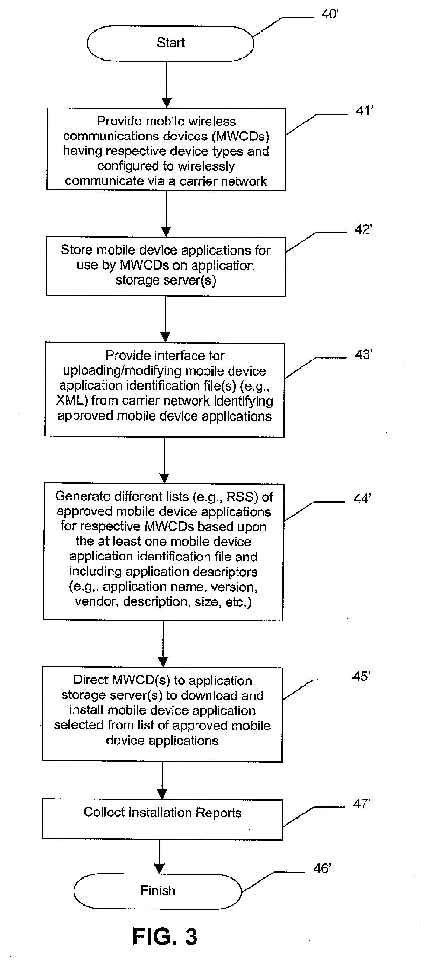

Referring additionally to FIG. 3, the interface module **35** also advantageously permits modification of the mobile device application identification file by the carrier network **32** (Block **43'**). Thus, the carrier may advantageously readily publish updated versions of applications, remove old or unsupported applications from the list of approved applications, etc., simply by updating the appropriate application identification file or files. In a cellular network application, it will be appreciated that numerous types of cellular devices from different manufacturers are typically used with a given network. Thus, it is particularly helpful for a carrier to have the ability to readily update application offerings and information as new types of devices are added to the network.

The processing module **36** of the application catalog server **34** may thus advantageously be configured to generate different lists of approved mobile device applications for respective mobile wireless communications device types **31** (Block **44'**). For example, different software applications may be designed for different mobile device operating platforms, and thus not be compatible with all device types, or certain applications may have minimum processing processing/memory requirements that are not available on some mobile device types.

In some embodiments, the mobile devices **31** may be configured to generate an installation report upon installation of the selected mobile device application, and the processing module **36** may advantageously be configured to collect the installation report, at Block **47'**. As such, the application catalog server **34** provides a convenient centralized location for collecting usage information for the various applications installed across multiple device types, and even across multiple carriers in embodiments where the application catalog server supports multiple networks, as will be appreciated by those skilled in the art.

It should be noted that the application catalog server **34** may collect other application lifecycle reporting information as well, in addition to (or in lieu of) installation events. By way of example, the mobile device **31** may also optionally report on one or more application lifecycle events including upgrades, downgrades, and deletions. Other application lifecycle events may include network, memory, or other usage statistics, for example.

In accordance with one example, the at least one application identification file may comprise an extensible markup language (XML) file (Block **43'**), although other suitable file types may also be used. Furthermore, the list of the approved mobile device applications may comprise a Really Simple Syndication (RSS) formatted list including a plurality of application descriptors (Block **44'**), though here again other suitable formats may also be used, as will be appreciated by those skilled in the art. Moreover, the application descriptors may include at least one of an application name, version, vendor, description, and size, as will be described further below.

It should be noted that the various components/functions of the application storage server and application catalog server **34** may be implemented using a combination of hardware and software components, and that they may also be implemented using a single server device in some embodiments, or in other embodiments these operations may be distributed across multiple computing devices, as will be appreciated by those skilled in the art. For example, in some embodiments there may be multiple application storage servers that host respective applications from different software developers or vendors, or different carriers. Moreover, in some embodiments the application catalog server may be implemented using a combination of computing devices in a network operating center (NOC), as will be discussed further in the following examples.

The foregoing will be further understood with reference to exemplary implementations thereof now described with reference to the BlackBerry^{®} mobile wireless communications infrastructure. More particularly, a given BlackBerry^{®} device may include application center software module 55 for performing the above-noted mobile device operations, including retrieving updated lists of available applications. In the exemplary implementation, the application catalog server is implemented using one or more application directory servers hosted in the NOC. However, the techniques described herein may be used with other mobile devices and systems, as will be appreciated by those skilled in the art.

The application center **55** is configured on the mobile device 31 via a service book over an available communication channel, e.g., a BlackBerry^{®} Enterprise Server (BES) or the BlackBerry^{®} Internet Service (BIS). Carriers or third party providers may advantageously host the applications, and the carriers may send updates to the application directory server through existing established channels used by VPL. When the BlackBerry^{®} device user accepts the terms and conditions of use, the device will acquire a list of available applications from the application directory server(s).

The retrieved list is an RSS-formatted list of application descriptors containing, for example: application name; version; vendor; brief description; size; an optional browser link (uniform resource locator, URL) pointing to detailed application information; a URL pointing to the application binaries hosted by the carrier; a URL pointing to an image location that will provide additional marketing and/or pricing information about the application; and a second URL for a smaller image for the application icon.

The main application screen displayed on the device by the application center **55** may advantageously provide the user with a list of applications available for installation provided by the particular carrier for the specific device model and handheld software version. Incompatible applications need not be displayed, and there may be separate lists hosted on the application development server per device model and handheld software version. The main screen will provide the user with the ability to browse the application list, and view the available information about each application in a detailed application screen. The detailed application screen displays a marketing image and opens a browser link, if available, that displays a detailed information page for that application. The application center **55** monitors for installed applications, and detects when an application that is in the list is installed on the device. It reports such events to the application directory server for logging purposes. Installation of other applications not available in the list are not reported, although they may be in some embodiments.

A description of exemplary application directory content is now provided. The application directory includes a set of static application listings. Application listings may be accessed by the application center 55 on BlackBerry^{®} devices based on information such as carrier, device model, operating system (OS) version, etc. Application listings may be grouped for carriers. The application listings may be prepared and published by the application directory administrator based on approved requests from carriers. An Application Listing is a list of application information for particular query criteria, such as carrier, device model, OS version, locale, etc. An application listing will be presented to the application center in a standardized format, such as an XML format (ATOM 1.0) upon request. An exemplary application listing is set forth at the end of the detailed description. The application information in the application listing may include the following properties, for example: application name; vendor; size; version; application description; URL to application bundle for installation; URL to additional information (price, etc.); URL to static application image (may be a relative path); URL to application icon image (may be a relative path); optional application categories; optional language; wireless access protocol (WAP) download; mandatory status (i.e., whether an application is mandatory, in which case an auto-load will be required by the device); and a value add application. However, not all of the above need be used in all implementations, and other information may also be included in some embodiments.

The application center **55** accesses the application directory for application listings for a specific carrier, device mode, OS version, and other information. The application directory returns the application listing for specific query criteria. The application center **55** may present the application listing to the user via the device **56** for application installation selection. The application center 55 will download the application for installation from the carrier or third party provider sites/servers upon selection or request by the user.

The application directory may advantageously host the most current application listings in pre-prepared XML files under certain directory structures. The application directory may optionally maintain the history of content changes. Manual maintenance to the directory content may be performed, particularly before new content is published.

The application directory may be hosted and maintained by an administrator. Moreover, application listings may be published to the application directory by the administrator. By way of example, carriers may provide a document for approval through preset channels. Upon approval, the document will be provided to the administrator to create, delete, and/or update application listings. Application directory administrators may prepare or update application listings upon carriers' requests, or this may be done directly by the carriers through a Web interface, for example. The administrator may edit the listings manually, or may use a utility to generate them. The new set of application listings is then published to the application directory.

The application directory may host application listings in static as well as dynamic files. An exemplary application directory structure may be provided as follows under an application directory root in a Web Server:

```
    /ac (Application Directory root)
 
        /<Carrier Name> (Carrier root)
 
            /<Country code> (Optional)
 
                 /<listing category, such as data plan>
 
                     /<Device Model>
 
                         /<OS Version>
 
                         /directory.xml (static
                             Application Listing
                             file)
 
                         /images/ (image root for the
                             Application Listing)
 
                         /icons/ (icon root for the
                             Application Listing)
```

An offline application directory management utility may be provided to help the application directory administrator prepare content according to the application directory structure. The utility may support such functions as: carrier additions; opening application listings for a carrier; creating a new listing for a device model; adding an application to an application listing; removing an application from the application listing; updating an application in the application listing; preparing publishing files, etc. The application directory administrator may advantageously be able to change the application listings content in the application directory using a programmatic, testable method (as opposed to a manual approach). A Web based application directory publishing utility may be provided to support online publishing of directory content. Through the publishing UI, the administrator may be able to upload the new, carrier specific application directory package from the file system and publish it into the directory server. Again, this may be done directly by the carrier as well.

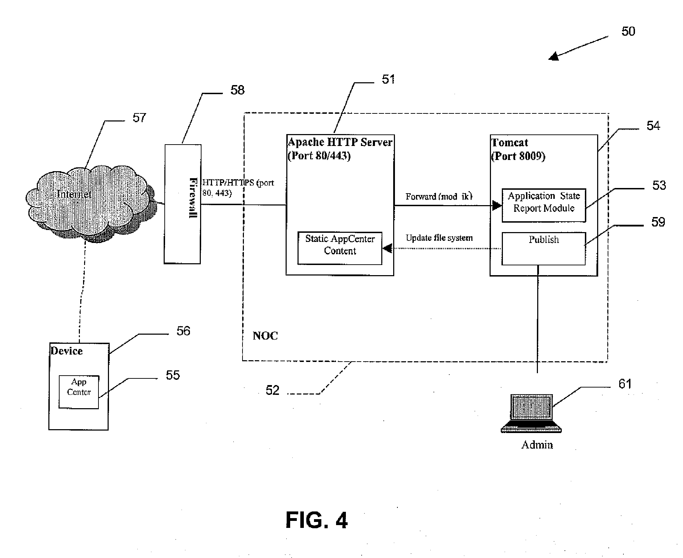

Exemplary application directory deployable components of a system 50 in accordance with a first embodiments are shown in FIG. 4. Static application center ("App Center") content (application listings for carriers) is deployed in an Apache HTTP server 51 at an NOC **52**. The server **51** may be publicly accessible through HTTP/HTTPS protocols as shown. An application state report module **53** is a Web application deployed in an Apache Tomcat server **54**. The module **53** accepts or collects application installation reports from the AppCenter **55** on mobile devices **56** through the HTTP protocol via the Internet **57** and a firewall **58**, for example. Reporting requests are forwarded from the Apache HTTP Server **51**. The application state report module **54** logs reports into daily and size rolling text based log files, for example. The root directory and base name of report files are advantageously configurable.

An application directory publish module **59** is a Web application deployed in the Apache Tomcat server **54**. It provides the capability for the application directory administrator to publish the new static AppCenter content deployed in the Apache HTTP Server **51** via an administrator station **61**. The administrator may access the application directory publish module **59** from a Web browser via the HTTP protocol, for example. The application directory publish module **59** may be granted write permission to the doc root of static AppCenter content. The application directory publish module **59** may generate a size rolling log file under a configurable location.

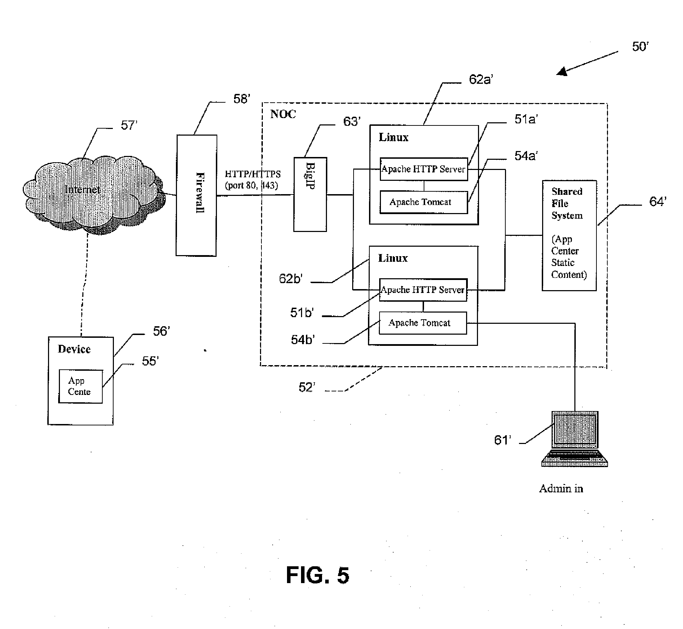

Another deployment configuration is shown in FIG. 5. In this deployment, an Apache HTTP server **51a'** and an Apache Tomcat server **54a'** are installed on a Linux machine **62a'** behind a firewall **58'.** The Apache HTTP server **51a'** is listening to ports 80 and 443 and servers for AppCenter 55' accessing. The Apache Tomcat server **54a'** is listening on port 8009 for Apache/Tomcat integration and is accessible via an intranet. The static AppCenter content may be deployed on the same Linux machine with the Apache HTTP server **51a'** and Apache Tomcat server **54a'** in some embodiments.

However, while a single Linux machine **62a'** may be used, in the illustrated example an Apache HTTP server and cluster file system including additional Linux machines **62b'**, etc., is advantageously used to accommodate high load and provide scalability. In this deployment, a homogeneous Apache HTTP Server cluster is configured using a BigIP load balancer **63'.** A doc root of a shared file system **64'** including static AppCenter content may be used to point to a desired location in the cluster file system. No specific routing algorithm is required to route HTTP requests from the BigIP load balancer **63'** to a given Apache HTTP server node **51'** in the cluster. However, a round robin configuration may be used, as will be appreciated by those skilled in the art.

Deployment of the Apache Tomcat server **54'** on the same Linux machine **62'** as a corresponding Apache HTTP server **51'** may be helpful in that each Apache HTTP server is forwarding application state report requests to the Apache Tomcat locally. Application publish Web application information may be passed the doc root in the cluster file system to publish new content only once, and may be accessed through a designated node.

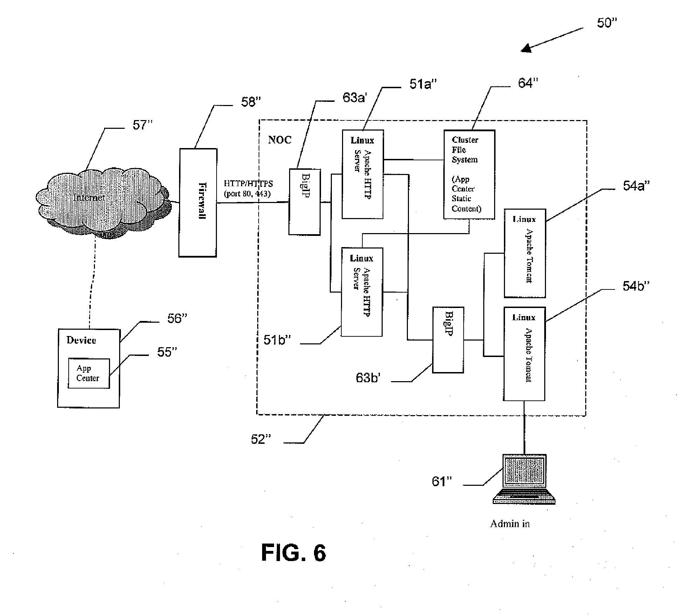

Referring now additionally to FIG. 6, in the event that enhanced scalability is desired, both homogeneous Apache HTTP server clusters and Apache Tomcat server clusters may be configured using a plurality of BigIP load balancers **63a'**, **63b'**, etc. The Apache HTTP servers **51"** in the cluster may be configured to forward application state report requests to the cluster of Apache Tomcat servers **54"**. Application publish Web application information may be passed to the doc root in the cluster file system to publish new content only once, and may be accessed through a designated node.

Another deployment consideration may include monitoring. The application directory server is deployed in the NOC 52, as noted above. Running status of the Apache HTTP server and Apache Tomcat server processes may be monitored. The monitoring service may be provided in the application directory publish module and application state report for monitoring purposes. An exemplary message log format is as follows:
[DateTime] [hostname] [] : [Log Level],, [Thread-ID],, [Classname], [Event Description]
For example:
2008-06-06T13:50:25.798 BCHEN-LT [] :DEBUG,,Thread-0,,PingServlet,Application Started.

Another deployment consideration is logging. Application status report log reporting from the AppCenter **55** is performed using daily and size rolling text files. The logging root directory and base filenames are configurable. The logs may be archived periodically. The application directory publish module 59 may log publishing activities. The log file name and location are configurable. The log file may also be archived periodically for debugging purposes. The X.509 format may be used to support HTTPS access to static AppCenter content (application listings) from the AppCenter **55** on the device **56**.

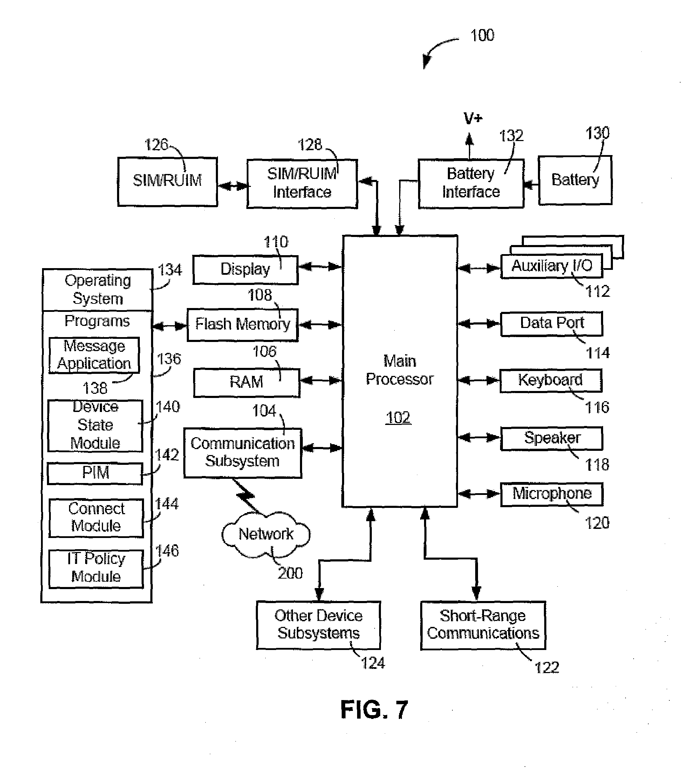

To aid the reader in understanding the structure of the mobile device and how it communicates with other devices and host systems, reference will now be made to FIGS. 7 through 10. Referring first to FIG. 7, shown therein is a block diagram of an example embodiment of a mobile device **100**. The mobile device **100** includes a number of components such as a main processor **102** that controls the overall operation of the mobile device **100**. Communication functions, including data and voice communications, are performed through a communication subsystem **104**. The communication subsystem **104** receives messages from and sends messages to a wireless network 200. In this example embodiment of the mobile device **100**, the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106**, a flash memory **108**, a display **110,** an auxiliary input/output (I/O) subsystem **112**, a data port **114**, a keyboard **116**, a speaker **118**, a microphone **120**, short-range communications **122** and other device subsystems **124**.

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200**, and device-resident functions such as a calculator or task list.

The mobile device **100** can send and receive communication signals over the wireless network **200** after required network registration or activation procedures have been completed. Network access is associated with a subscriber or user of the mobile device **100**. To identify a subscriber, the mobile device **100** requires a SIM/RUIM card **126** (i.e. Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100**, among other things. Without the SIM card **126**, the mobile device **100** is not fully operational for communication with the wireless network **200**. By inserting the SIM card/RUIM **126** into the SIM/RUIM interface **128**, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128**, it is coupled to the main processor **102**. In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108**.

The mobile device **100** is a battery-powered device and includes a battery interface **132** for receiving one or more rechargeable batteries **130**. In at least some example embodiments, the battery **130** can be a smart battery with an embedded microprocessor. The battery interface **132** is coupled to a regulator (not shown), which assists the battery **130** in providing power V+ to the mobile device **100**. Although current technology makes use of a battery, future technologies such as micro fuel cells may provide the power to the mobile device **100**.

The mobile device **100** also includes an operating system **134** and software components **136** to **146** which are described in more detail below. The operating system **134** and the software components **136** to **146** that are executed by the main processor **102** are typically stored in a persistent store such as the flash memory **108**, which may alternatively be a read-only memory (ROM) or similar storage element (not shown). Those skilled in the art will appreciate that portions of the operating system **134** and the software components **136** to **146**, such as specific device applications, or parts thereof, may be temporarily loaded into a volatile store such as the RAM **106**. Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100**. In at least some example embodiments, some of the sent and received messages may be stored remotely from the device **100** such as in a data store of an associated host system that the mobile device **100** communicates with.

The software applications can further include a device state module **140**, a Personal Information Manager (PIM) **142**, and other suitable modules (not shown). The device state module **140** provides persistence, i.e. the device state module **140** ensures that important device data is stored in persistent memory, such as the flash memory **108**, so that the data is not lost when the mobile device **100** is turned off or loses power.

The PIM **142** includes functionality for organizing and managing data items of interest to the user, such as, but not limited to, e-mail, contacts, calendar events, voice mails, appointments, and task items. A PIM application has the ability to send and receive data items via the wireless network **200**. PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

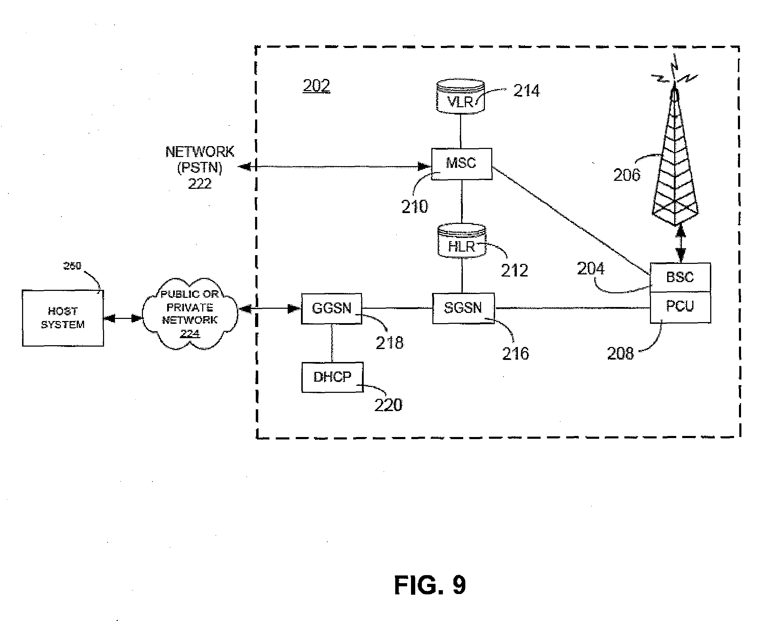

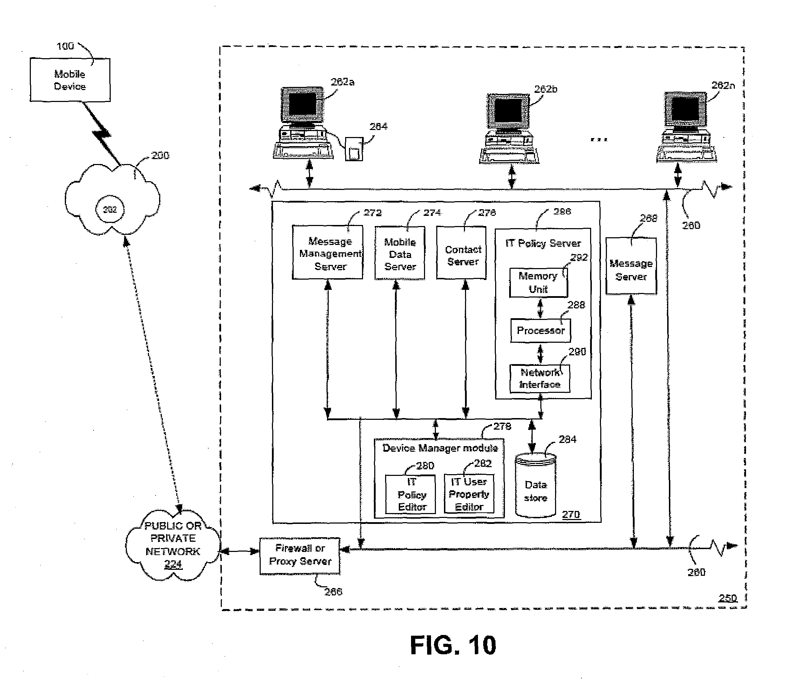

The mobile device **100** also includes a connect module **144**, and an IT policy module **146**. The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 9 and 10, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100**. This can be done in a wireless or wired manner. These instructions can then be passed to the IT policy module **146** to modify the configuration of the device **100**. Alternatively, in some cases, the IT policy update can also be done over a wired connection.

The IT policy module **146** receives IT policy data that encodes the IT policy. The IT policy module **146** then ensures that the IT policy data is authenticated by the mobile device **100**. The IT policy data can then be stored in the flash memory **106** in its native form. After the IT policy data is stored, a global notification can be sent by the IT policy module **146** to all of the applications residing on the mobile device **100**. Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100**. These software applications can be third party applications, which are added after the manufacture of the mobile device **100**. Examples of third party applications include games, calculators, utilities, etc.

The additional applications can be loaded onto the mobile device **100** through at least one of the wireless network **200**, the auxiliary I/O subsystem **112**, the data port **114**, the short-range communications subsystem **122**, or any other suitable device subsystem **124**. This flexibility in application installation increases the functionality of the mobile device **100** and may provide enhanced on-device functions, communication-related functions, or both. For example, secure communication applications may enable electronic commerce functions and other such financial transactions to be performed using the mobile device **100**.

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100**.

The short-range communications subsystem **122** provides for communication between the mobile device **100** and different systems or devices, without the use of the wireless network **200**. For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as e-mail messages, for example, using the keyboard **116** in conjunction with the display **110** and possibly the auxiliary I/O subsystem **112**. The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104**.

For voice communications, the overall operation of the mobile device **100** is substantially similar, except that the received signals are output to the speaker **118**, and signals for transmission are generated by the microphone **120**. Alternative voice or audio I/O subsystems, such as a voice message recording subsystem, can also be implemented on the mobile device **100**. Although voice or audio signal output is accomplished primarily through the speaker **118**, the display **110** can also be used to provide additional information such as the identity of a calling party, duration of a voice call, or other voice call related information.

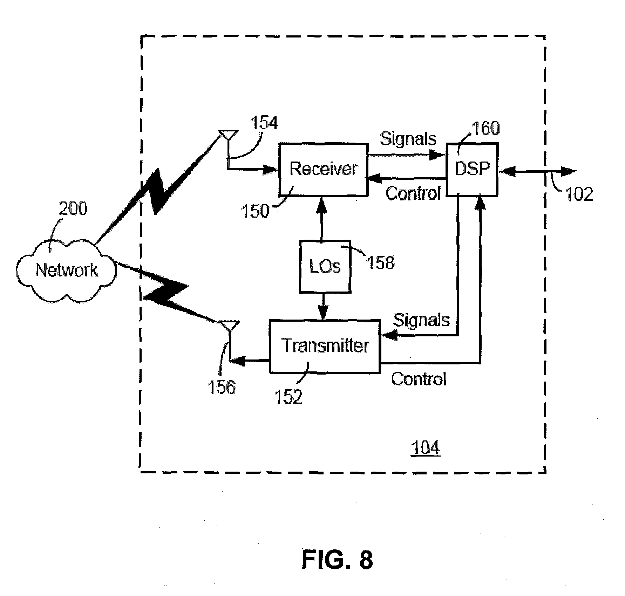

Referring now to FIG. 8, an example block diagram of the communication subsystem component **104** is shown. The communication subsystem 104 includes a receiver **150**, a transmitter **152**, as well as associated components such as one or more embedded or internal antenna elements **154** and **156**, Local Oscillators (LOs) **158,** and a processing module such as a Digital Signal Processor (DSP) **160**. The particular design of the communication subsystem **104** is dependent upon the communication network **200** with which the mobile device **100** is intended to operate. Thus, it should be understood that the design illustrated in FIG. 8 serves only as one example.

Signals received by the antenna **154** through the wireless network **200** are input to the receiver **150**, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160**. In a similar manner, signals to be transmitted are processed, including modulation and encoding, by the DSP **160**. These DSP-processed signals are input to the transmitter **152** for digital-to-analog (D/A) conversion, frequency up conversion, filtering, amplification and transmission over the wireless network **200** via the antenna **156**. The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160**.

The wireless link between the mobile device **100** and the wireless network **200** can contain one or more different channels, typically different RF channels, and associated protocols used between the mobile device **100** and the wireless network **200**. An RF channel is a limited resource that must be conserved, typically due to limits in overall bandwidth and limited battery power of the mobile device **100**.

When the mobile device 100 is fully operational, the transmitter **152** is typically keyed or turned on only when it is transmitting to the wireless network **200** and is otherwise turned off to conserve resources. Similarly, the receiver **150** is periodically turned off to conserve power until it is needed to receive signals or information (if at all) during designated time periods.

Referring now to FIG. 9, a block diagram of an example implementation of a node **202** of the wireless network **200** is shown. In practice, the wireless network **200** comprises one or more nodes **202**. In conjunction with the connect module **144**, the mobile device **100** can communicate with the node **202** within the wireless network **200**. In the example implementation of FIG. 9, the node **202** is configured in accordance with General Packet Radio Service (GPRS) and Global Systems for Mobile (GSM) technologies. The node **202** includes a base station controller (BSC) **204** with an associated tower station **206**, a Packet Control Unit (PCU) **208** added for GPRS support in GSM, a Mobile Switching Center (MSC) **210**, a Home Location Register (HLR) **212**, a Visitor Location Registry (VLR) **214**, a Serving GPRS Support Node (SGSN) **216,** a Gateway GPRS Support Node (GGSN) **218**, and a Dynamic Host Configuration Protocol (DHCP) **220**. This list of components is not meant to be an exhaustive list of the components of every node **202** within a GSM/GPRS network, but rather a list of components that are commonly used in communications through the network **200**.

In a GSM network, the MSC **210** is coupled to the BSC **204** and to a landline network, such as a Public Switched Telephone Network (PSTN) **222** to satisfy circuit switched requirements. The connection through the PCU 208, the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210**.

The station **206** is a fixed transceiver station and together with the BSC **204** form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station **206**. The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212**. The HLR **212** also contains location information for each registered mobile device and can be queried to determine the current location of a mobile device. The MSC **210** is responsible for a group of location areas and stores the data of the mobile devices currently in its area of responsibility in the VLR **214**. Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214**, the amount of traffic between these nodes can be reduced so that voice and data services can be provided with faster response times and at the same time requiring less use of computing resources.

The SGSN **216** and the GGSN **218** are elements added for GPRS support; namely packet switched data support, within GSM. The SGSN **216** and the MSC **210** have similar responsibilities within the wireless network 200 by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200**. During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218**. There are many mechanisms for dynamic IP assignment, including using a combination of a Remote Authentication Dial-In User Service (RADIUS) server and a DHCP server. Once the GPRS Attach is complete, a logical connection is established from a mobile device **100**, through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200**, insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200**. To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220**.

Referring now to FIG. 10, shown therein is a block diagram illustrating components of an example configuration of a host system **250** that the mobile device 100 can communicate with in conjunction with the connect module **144.** The host system **250** will typically be a corporate enterprise or other local area network (LAN), but may also be a home office computer or some other private system, for example, in variant implementations. In this example shown in FIG. 10, the host system **250** is depicted as a LAN of an organization to which a user of the mobile device **100** belongs. Typically, a plurality of mobile devices can communicate wirelessly with the host system **250** through one or more nodes **202** of the wireless network **200**.

The host system **250** comprises a number of network components connected to each other by a network **260**. For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260**, and each may or may not be equipped with an accompanying cradle **264**. The cradle **264** facilitates the loading of information (e.g. PIM data, private symmetric encryption keys to facilitate secure communications) from the user computer **262a** to the mobile device **100**, and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 10. Furthermore, only a subset of network components of the host system **250** are shown in FIG. 10 for ease of exposition, and it will be understood by persons skilled in the art that the host system **250** will comprise additional components that are not explicitly shown in FIG. 10 for this example configuration. More generally, the host system **250** may represent a smaller part of a larger network (not shown) of the organization, and may comprise different components and/or be arranged in different topologies than that shown in the example embodiment of FIG. 10.

To facilitate the operation of the mobile device **100** and the wireless communication of messages and message-related data between the mobile device **100** and components of the host system **250**, a number of wireless communication support components **270** can be provided. In some implementations, the wireless communication support components **270** can include a message management server **272**, a mobile data server **274**, a contact server **276**, and a device manager module 278. The device manager module **278** includes an IT Policy editor **280** and an IT user property editor **282**, as well as other software components for allowing an IT administrator to configure the mobile devices **100**. In an alternative example embodiment, there may be one editor that provides the functionality of both the IT policy editor **280** and the IT user property editor **282**. The support components **270** also include a data store **284**, and an IT policy server **286**. The IT policy server **286** includes a processor 288, a network interface **290** and a memory unit **292**. The processor **288** controls the operation of the IT policy server **286** and executes functions related to the standardized IT policy as described below. The network interface **290** allows the IT policy server **286** to communicate with the various components of the host system **250** and the mobile devices **100**. The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266**. The proxy server **266** provides a secure node and a wireless internet gateway for the host system **250**. The proxy server 266 intelligently routes data to the correct destination server within the host system **250**.

In some implementations, the host system **250** can include a wireless VPN router (not shown) to facilitate data exchange between the host system **250** and the mobile device **100**. The wireless VPN router allows a VPN connection to be established directly through a specific wireless network to the mobile device **100**. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device **100** are initially received by a message server **268** of the host system **250**. Such messages may originate from any number of sources. For instance, a message may have been sent by a sender from the computer **262b** within the host system **250**, from a different mobile device (not shown) connected to the wireless network **200** or a different wireless network, or from a different computing device, or other device capable of sending messages, via the shared network infrastructure **224**, possibly through an application service provider (ASP) or Internet service provider (ISP), for example.

The message server **268** typically acts as the primary interface for the exchange of messages, particularly e-mail messages, within the organization and over the shared network infrastructure **224**. Each user in the organization that has been set up to send and receive messages is typically associated with a user account managed by the message server **268**. Some example implementations of the message server **268** include a Microsoft Exchange^{™} server, a Lotus Domino^{™} server, a Novell Groupwise^{™} server, or another suitable mail server installed in a corporate environment. In some implementations, the host system **250** may comprise multiple message servers **268**. The message server **268** may also be adapted to provide additional functions beyond message management, including the management of data associated with calendars and task lists, for example.

When messages are received by the message server **268**, they are typically stored in a data store associated with the message server **268**. In at least some example embodiments, the data store may be a separate hardware unit, such as data store **284**, that the message server **268** communicates with. Messages can be subsequently retrieved and delivered to users by accessing the message server **268**. For instance, an e-mail client application operating on a user's computer **262a** may request the e-mail messages associated with that user's account stored on the data store associated with the message server **268**. These messages are then retrieved from the data store and stored locally on the computer **262a**. The data store associated with the message server **268** can store copies of each message that is locally stored on the mobile device 100. Alternatively, the data store associated with the message server **268** can store all of the messages for the user of the mobile device **100** and only a smaller number of messages can be stored on the mobile device **100** to conserve memory. For instance, the most recent messages (i.e. those received in the past two to three months for example) can be stored on the mobile device **100**.

When operating the mobile device **100**, the user may wish to have e-mail messages retrieved for delivery to the mobile device **100**. The message application **138** operating on the mobile device **100** may also request messages associated with the user's account from the message server **268**. The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device **100** is assigned its own e-mail address, and messages addressed specifically to the mobile device **100** are automatically redirected to the mobile device **100** as they are received by the message server **268**.

The message management server **272** can be used to specifically provide support for the management of messages, such as e-mail messages, that are to be handled by mobile devices. Generally, while messages are still stored on the message server **268**, the message management server **272** can be used to control when, if, and how messages are sent to the mobile device **100**. The message management server **272** also facilitates the handling of messages composed on the mobile device **100**, which are sent to the message server **268** for subsequent delivery.

For example, the message management server **272** may monitor the user's "mailbox" (e.g. the message store associated with the user's account on the message server **268**) for new e-mail messages, and apply user-definable filters to new messages to determine if and how the messages are relayed to the user's mobile device **100**. The message management server **272** may also compress and encrypt new messages (e.g. using an encryption technique such as Data Encryption Standard (DES), Triple DES, or Advanced Encryption Standard (AES)) and push them to the mobile device **100** via the shared network infrastructure **224** and the wireless network **200**. The message management server **272** may also receive messages composed on the mobile device **100** (e.g. encrypted using Triple DES), decrypt and decompress the composed messages, re-format the composed messages if desired so that they will appear to have originated from the user's computer **262a**, and re-route the composed messages to the message server **268** for delivery.

Certain properties or restrictions associated with messages that are to be sent from and/or received by the mobile device **100** can be defined (e.g. by an administrator in accordance with IT policy) and enforced by the message management server **272**. These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g. "blocks") of a message stored on the message server **268** to the mobile device **100**. For example, in some cases, when a message is initially retrieved by the mobile device **100** from the message server **268**, the message management server **272** may push only the first part of a message to the mobile device **100**, with the part being of a pre-defined size (e.g. 2 KB). The user can then request that more of the message be delivered in similar-sized blocks by the message management server **272** to the mobile device **100**, possibly up to a maximum pre-defined message size. Accordingly, the message management server **272** facilitates better control over the type of data and the amount of data that is communicated to the mobile device **100**, and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server 276 can include the name, phone number, work address and e-mail address of the contact, among other information. The contact server 276 can also provide a global address list that contains the contact information for all of the contacts associated with the host system **250**.

It will be understood by persons skilled in the art that the message management server **272**, the mobile data server **274**, the contact server **276**, the device manager module **278**, the data store **284** and the IT policy server 286 do not need to be implemented on separate physical servers within the host system **250**. For example, some or all of the functions associated with the message management server **272** may be integrated with the message server **268**, or some other server in the host system **250**. Alternatively, the host system **250** may comprise multiple message management servers **272**, particularly in variant implementations where a large number of mobile devices need to be supported.

Alternatively, in some example embodiments, the IT policy server **286** can provide the IT policy editor **280**, the IT user property editor **282** and the data store **284**. In some cases, the IT policy server **286** can also provide the device manager module **278.** The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit 292 can provide the data store **284**.

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices **100** such as auto signature text, WLAN/VoIP/VPN configuration, security requirements (e.g. encryption algorithms, password rules, etc.), specifying themes or applications that are allowed to run on the mobile device **100**, and the like.

### Exemplary Application Listing

```
 <ac:updatelnterval>7</ac:updatelnterval> - listing update interval in days.
 <ac:version>1.0.0.26</ac:version> - application version.
 <ac:vendor>Research In Motion Ltd.</ac:vendor> - application vendor
 <ac:size>69000</ac:size> - application size
 <ac:iconURL>/icons/1212644020799icon.png</ac:iconURL> - application
 ICON URL
 <ac:imageURL>/images/1212418909630Spb_Wallet-2000.jpg</ac:imageURL> -
 application image URL
 <ac:infoURL>http.//www.rim.com/info</ac:infoURL > - optional, application info URL
 <ac:rnandatory>true</ac:mandatory > - optional, mandatory application
 <ac:wap>true</ac:wap> - optional, download through WAP protocol
 <ac:rimvalueAddedApp>true</ac:rimvalueAddedApp > - optional, RIM value added
 application
```

```
 <?xml version="1.0" encoding="UTF-8"?>
 <feed xmlns="http://www.w3.org/2005/Atom" xmlns:dc="http://purl.org/dclelements/1.1/"
 xmlns:sy="http://purl.org/rss/1.0/modules/syndication/"
 xmlns:taxo="http.//purl.org/rss/1.0/modules/taxonomy/"
 xmlns:ac="http://www.rim.net/appcenter/directory/1.0"
 xmns:rdf="http://www.w3.org/999/2/22-rdf-syntax-ns#">
 <title>Application Listing for Research In Motion Ltd. BlackBerry 9000 devices with OS
 4.6.0</title>
 <link rel="alternate" href="http://www.blackberry.com" />
 <subtitle>This is the directory of applications available for BlackBerry 9000 devices
 from Research In Motion Ltd.. Supporting OS version: 4.6.0</subtitle>
 <ac:updatelnterval>7</ac:updatelnterval>
 <entry>
 <title>Wallet</title>
  <link rel="alternate" href="http://mds03-vmyyz/rimapp/wallet/4.2.1/wallet.jad" />
  <author>
  <name />
  </author>
  <summary type="TEXT">Wallet</summary>
 <ac:version>1.0.0.26</ac:version>
 <ac:vendor>Research In Motion Ltd.</ac:vendor>
 <ac:size>69000</ac:size>
 <ac:iconURL>/icons/1212644020799icon.png</ac:iconURL>
  <ac:imageURL>/images/1212418909630Spb_Wallet_2000.jpg</ac:imageURL>
  <ac:wap>true</ac:wap>
 </entry>
 <entry>
 <title>Ecommerce Content Optimization Engine</title>
 <link rel="alternate" href="http://mds03-vmyyz/rimapp/ecoe/4.2.1/ecoe.jad" />
 <author>
  <name />
 </author>
 <summary type="TEXT" />
 <ac:version>1.0.0.27</ac:version>
 <ac:vendor>Research In Motion Ltd.</ac:vendor>
 <ac:size>64000</ac:size>
 <ac:iconURL>/icons/1212417757603jcon.png</ac:iconURL>
  <ac:imageURL>/images/1212417700411 rim-logo.jpg</ac:imageURL>
  <ac:rimvalueAddedApp>true</ac:rimvalueAddedApp>
 </entry>
 <entry>
  <title>Facebook</title>
  <link rel="alternate" href="http://mds03-
 vmyyz/rimapp/facebook/For_4.6.0/net_rim_bb_facebook.jad" />
  <author>
  <name />
  </author>
  <summary type="TEXT">Facebook</summary>
  <ac:version>1.2.9</ac:version>
  <ac:vendor>Research In Motion Limited</ac:vendor>
  <ac:size>244000</ac:size>
  <ac:iconURL>/icans/1212418001460icon.png</ac:iconURL>
  <ac:imageURL>/images/1212418001460facebook-icon.gif</ac:imageURL>
 </entry>
 <entry>
  <title>Windows Live Messenger</title>
  <link rel="alternate" href="http://mds03-
 vmyyz/rimapp/msn/For_4.6.0/msn_460_en.jad" />
  <author>
  <name />
  </author>
  <summary type="TEXT">Windows Live Messenger</summary>
  <ac:version>2.1.18</ac:version>
  <ac:vendor>Research In Motion Limited</ac:vendor>
  <ac:size>343000</ac:size>
  <ac:iconURL>/icons/1212418571991icon.png</ac:iconURL>
  <ac:imageURL>/images/1212418571991msn_messenger_logo.jpg</ac:imageURL>
  <ac:mandatory>true</ac:mandatory>
 </entry>
 <entry>
 <title>BlackBerry Client for Lotus Connections</title>
  <link rel="alternate" href="http://mds03-
 vmyyz/rimapp/connections/For_4.2.1/Connections.jad" />
  <author>
  <name />
 </author>
 <summary type="TEXT">BlackBerry Client for Lotus Connections</summary>
 <ac:version>1.0.0</ac:version>
 <ac:vendor>Research In Motion Limited</ac:vendor>
 <ac:size>73000</ac:size>
 <ac:iconURL>/icons/1212497492293icon.png</ac:iconURL>
 <ac:imageURL>/images/1212417492152connections-logo108.png</ac:imageURL>
 </entry>
 <entry>
 <title>Yahoo! Messenger</title>
  <link rel="alternate" href="http://mds03-
 vmyyz/rimapp/yahoo/For_4.6.0/yahoo_460_en.jad" />
  <author>
  <name />
  </author>
  <summary type="TEXT">Yahoo! Messenger</summary>
  <ac:version>2.1.18</ac:version>
  <ac:vendor>Research In Motion</ac:vendor>
  <ac:size>359000</ac:size>
  <ac:iconURL>/icons/1212438030751icon.png</ac:iconURL>
  <ac:imageURL>/images/1212438030720t_Yahoo_Messenger_.jpg</ac:imageURL>
 </entry>
 <entry>
  <title>AOL Instant Messenger</title>
 <link rel="alternate" href="http://mds03-vmyyz/rimapp/aim/For_4.6.0/aim_460_en.jad"
 />
  <author>
  <name />
  </author>
  <summary type="TEXT">AOL Instant Messenger</summary>
  <ac:version>2.1.18</ac:version>
  <ac:vendor>Research In Motion Limited</ac:vendor>
  <ac:size>279000</ac:size>
  <ac:iconURL>/icons/1212416553842icon.png</ac:iconURL>
  <ac:imageURL>/images/1212416604719549.JPG</ac:imageURL>
 </entry>
 <entry>
  <title>Word Press</title>
  <link rel="alternate" href="http://mds03-
 vmyyz/rimapp/wordpress/For_4.2.0/net_rim_bb_wordpress.jad" />
  <author>
  <name />
  </author>
  <summary type="TEXT">Word Press</summary>
  <ac:version>1.0.3</ac:version>
  <ac:vendor>Research In Motion Limited</ac:vendor>
  <ac:size>58000</ac:size>
  <ac:iconURL>/icons/1212419103075icon.png</ac:iconURL>
  <ac:imageURL>/images/1212419102997wordpress-logo-cristal.jpg</ac:imageURL>
 </entry>
 <entry>
  <title>Picasa</title>
 <link rel="alternate" href="http://mds03-
 vmyyz/rimapp/picasa/For_4.2.0/net_rim_bb_picasa.jad" />
 <author>
  <name />
 </author>
 <summary type="TEXT">Picasa</summary>
  <ac:version>1.0.0</ac:version>
  <ac:vendor>Research In Motion Limited</ac:vendor>
  <ac:size>0</ac:size>
  <ac:iconURL>/icons/1212418766281icon.png</ac:iconURL>
  <ac:imageURL>/images/1212418766281icon.png</ac:imageURL>
 </entry>
 <entry>
  <title>ICQ</title>
  <link rel="alternate" href="http://mds03-vmyyz/rimapp/icq/For_4.2.0/icq_420_en.jad"
 />
  <author>
  <name />
  </author>
  <summary type="TEXT">ICQ</summary>
  <ac:version>2.1.18</ac:version>
  <ac:vendor>Research In Motion Limited</ac:vendor>
  <ac:size>284000</ac:size>
  <ac:iconURL>/icons/1212418418541icon.png</ac:iconURL>
  <ac:imageURL>/images/1212418418541icq_logo.gif</ac:imageURL>
 </entry>
 <entry>
  <title>Google Talk</title>
  <link rel="alternate" href="http://mds03-
 vmyyz/rimapp/google/For_4.6.0/google_460_en.jad" />
  <author>
  <name />
  </author>
  <summary type="TEXT">Google Talk</summary>
  <ac:version>2.1.18</ac:version>
  <ac:vendor>Research In Motion Limited</ac:vendor>
  <ac:size>29900</ac:size>
  <ac:iconURL>/icons/1212418216007icon.png</ac:iconURL>
  <ac:imageURL>/images/1212418215866Google_Taik_(logo).jpg</ac:imageURL>
 </entry>
 </feed>
```

Many modifications and other example embodiments will come to the mind of one skilled in the art having the benefit of the teachings presented in the foregoing descriptions and the associated drawings. Therefore, it is understood that the invention is not to be limited to the specific example embodiments disclosed, and that modifications and example embodiments are intended to be included.

## Claims

1. A mobile wireless communications system comprising:
at least one mobile wireless communications device configured to wirelessly communicate via a carrier network;
at least one application storage server configured to store a plurality of mobile device applications for use by the at least one mobile wireless communications device; and
an application catalog server configured to
provide an interface for uploading at least one mobile device application identification file from the carrier network identifying approved mobile device applications,
generate a list of the approved mobile device applications to be presented on said at least one mobile wireless communications device based upon the at least one mobile device application identification file, and
direct said at least one mobile wireless communications device to said at least one application storage server to download and install a mobile device application selected from the list of approved mobile device applications.

2. The mobile wireless communications system of Claim 1 wherein the interface is also for permitting modification of the at least one mobile device application identification file by the carrier network.

3. The mobile wireless communications system of Claim 1 wherein said at least one mobile wireless communications device comprises a plurality thereof having respective device types; and wherein said application catalog server is configured to generate different lists of approved mobile device applications for respective mobile wireless communications device types.

4. The mobile wireless communications system of Claim 1 wherein said at least one mobile wireless communications device is configured to generate an installation report upon installation of the selected mobile device application; and wherein said application catalog server is configured to collect the installation report.

5. The mobile wireless communications system of Claim 1 wherein the at least one application identification file comprises an extensible markup language (XML) file.

6. The mobile wireless communications system of Claim 1 wherein the list of the approved mobile device applications comprises a Really Simple Syndication (RSS) formatted list comprising a plurality of application descriptors.

7. The mobile wireless communications system of Claim 6 wherein the application descriptors comprise at least one of an application name, version, vendor, description, and size.

8. An application catalog server for use with at least one mobile wireless communications device configured to wirelessly communicate via a carrier network and at least one application storage server configured to store a plurality of mobile device applications for use by the at least one mobile wireless communications device, the application catalog server comprising:
an interface module configured to provide an interface for uploading at least one mobile device application identification file from the carrier network identifying approved mobile device applications; and
a processing module configured to
generate a list of the approved mobile device applications to be presented on the at least one mobile wireless communications device based upon the at least one mobile device application identification file, and
direct the at least one mobile wireless communications device to the at least one application storage server to download and install a mobile device application selected from the list of approved mobile device applications.

9. The application catalog server of Claim 8 wherein the interface is also for permitting modification of the at least one mobile device application identification file by the carrier network.

10. The application catalog server of Claim 8 wherein the at least one mobile wireless communications device comprises a plurality thereof having respective device types; and wherein said processing module is configured to generate different lists of approved mobile device applications for respective mobile wireless communications device types.

11. The application catalog server of Claim 8 wherein the at least one mobile wireless communications device is configured to generate an installation report upon installation of the selected mobile device application; and wherein said processing module is configured to collect the installation report.

12. A mobile wireless communications method comprising:
providing at least one mobile wireless communications device configured to wirelessly communicate via a carrier network;
storing a plurality of mobile device applications for use by the at least one mobile wireless communications device on at least one application storage server; and
at an application catalog server,
providing an interface for uploading at least one mobile device application identification file from the carrier network identifying approved mobile device applications,
generating a list of the approved mobile device applications to be presented on the at least one mobile wireless communications device based upon the at least one mobile device application identification file, and
directing the at least one mobile wireless communications device to the at least one application storage server to download and install a mobile device application selected from the list of approved mobile device applications.

13. The method of Claim 12 wherein the interface is also for permitting modification of the at least one mobile device application identification file by the carrier network.

14. The method of Claim 12 wherein the at least one mobile wireless communications device comprises a plurality thereof having respective device types; and further comprising generating different lists of approved mobile device applications for respective mobile wireless communications device types at the application catalog server.

15. The method of Claim 12 wherein the at least one mobile wireless communications device is configured to generate an installation report upon installation of the selected mobile device application; and further comprising collecting the installation report at the application catalog server.

## Amended claims

### Amended claims in accordance with Rule 137(2) EPC.

**1.** A mobile wireless communications system (30) comprising a plurality of mobile wireless communications devices (31) having respective device types and configured to wirelessly communicate via a carrier network (32) and at least one application storage server (33) configured to store a plurality of mobile device applications for use by the mobile wireless communications devices, the mobile wireless communications system further comprising:
an application catalog server (34) configured to provide an interface for uploading a plurality of mobile device application identification files from the carrier network identifying approved mobile device applications for respective mobile wireless communications device types,
generate a respective list of the approved mobile device applications to be presented on each mobile wireless communications device based upon its mobile device application identification file, and
direct said mobile wireless communications devices to said at least one application storage server to download and install a mobile device application selected from the respective list of approved mobile device applications.

**2.** The mobile wireless communications system (30) of Claim 1 wherein the interface is also for permitting modification of the mobile device application identification files by the carrier network (32).

**3.** The mobile wireless communications system (30) of Claim 1 wherein said mobile wireless communications devices are configured to generate respective installation reports upon installation of the selected mobile device application; and wherein said application catalog server (34) is configured to collect the installation reports.

**4.** The mobile wireless communications system (30) of Claim 1 wherein the application identification files comprise extensible markup language (XML) files.

**5.** The mobile wireless communications system (30) of Claim 1 wherein the lists of the approved mobile device applications comprise Really Simple Syndication (RSS) formatted lists comprising a plurality of application descriptors.

**6.** The mobile wireless communications system (30) of Claim 6 wherein the application descriptors comprise at least one of an application name, version, vendor, description, and size.

**7.** An application catalog server (34) for use with a plurality of mobile wireless communications devices (31) having respective device types and configured to wirelessly communicate via a carrier network (32) and at least one application storage server (33) configured to store a plurality of mobile device applications for use by the mobile wireless communications devices, the application catalog server further comprising:
an interface module (35) configured to provide an interface for uploading a plurality of mobile device application identification files from the carrier network identifying approved mobile device applications for respective mobile wireless communications device types; and
a processing module (36) configured to generate a respective list of the approved mobile device applications to be presented on each mobile wireless communications device based upon its mobile device application identification file, and
direct the mobile wireless communications devices to the at least one application storage server to download and install a mobile device application selected from the respective list of approved mobile device applications.

**8.** The application catalog server (34) of Claim 7 wherein the interface is also for permitting modification of the mobile device application identification files by the carrier network (32).

**9.** The application catalog server (34) of Claim 7 wherein the mobile wireless communications devices (31) are configured to generate respective installation reports upon installation of the selected mobile device application; and wherein said processing module (36) is configured to collect the installation reports.

**10.** A mobile wireless communications method comprising providing a plurality of mobile wireless communications devices (31) configured to wirelessly communicate via a carrier network (32), and storing a plurality of mobile device applications for use by the mobile wireless communications devices on application storage server (33), the method further comprising:
at an application catalog server (34), providing an interface for uploading a plurality of mobile device application identification files from the carrier network identifying approved mobile device applications for respective mobile wireless communications device types,
generating a respective list of the approved mobile device applications to be presented on each mobile wireless communications device based upon its mobile device application identification file, and
directing the at least one mobile wireless communications devices to the application storage server to download and install a mobile device application selected from the respective list of approved mobile device applications.

**11.** The method of Claim 10 wherein the interface is also for permitting modification of the at least one mobile device application identification files by the carrier network (32).

**12.** The method of Claim 10 wherein the mobile wireless communications devices (31) are configured to generate respective installation reports upon installation of the selected mobile device application; and further comprising collecting the installation reports at the application catalog server (34).
